# EUROPEAN PATENT SPECIFICATION

(11) **EP 3 368 309 B1**
(45) Date of publication and mention of the grant of the patent: **02.09.2020**
(21) Application number: 16860777.8
(22) Date of filing: 27.10.2016
(51) Int. Cl.: B29D 29/06, B29C 43/48, B32B 37/10, B29C 43/24, B29C 43/28, B30B 5/06, B30B 15/30, C08J 3/24, C08K 9/12, B65G 15/34, C08K 5/14, B29C 43/52, B29L 31/00, B29K 21/00, B29K 105/08, B32B 37/24

(54) **PROCESS FOR MANUFACTURING A CONVEYOR BELT**
VERFAHREN ZUR HERSTELLUNG EINES FÖRDERBANDES
PROCÉDÉ DE FABRICATION DE BANDE TRANSPORTEUSE

(30) Priority: 28.10.2015 US 201562247427 P
(43) Date of publication of application: 05.09.2018
(73) Proprietor: ContiTech Transportbandsysteme GmbH, 30165 Hannover (DE)
(72) Inventor: MAGUIRE, David J., Hudson, Ohio 44236 (US); SI, Mayu, Hudson, Ohio 44236 (US); PERO, Gregory, Norton, Ohio 44203 (US)
(74) Representative: Preusser, Andrea
(86) International application number: PCT/US2016/059082
(87) International publication number: WO 2017/075199

(56) References cited:
- US-A- 2 075 735
- US-A- 4 547 422
- US-A- 5 495 935
- US-A1- 2014 021 021
- US-B1- 6 224 804
- US-B1- 6 235 133

## Description

### FIELD

The field to which the disclosure generally relates is conveyor belts, and more particularly to highly efficient and cost effective methods for manufacturing high performance conveyor belts having high temperature resistance which reduces the amount of calendaring and Banbury mixing required in manufacturing the conveyor belts.

### BACKGROUND

This section provides background information to facilitate a better understanding of the various aspects of the disclosure. It should be understood that the statements in this section of this document are to be read in this light, and not as admissions of prior art.

Conventional conveyor belts used in a wide variety of applications are typically comprised of a cured rubber as a top layer, a cured rubber as a bottom layer, and a fabric reinforcement layer (a carcass) which is sandwiched between the top layer and the bottom layer. Rubber conveyor belts of this type can offer excellent performance characteristics and a relatively long service life. However, rubber conveyor belts are labor intensive to manufacture by virtue of requiring rubber mixing steps, such as Banbury mixing and calendaring, and also require a curing step wherein the rubber components of the belt are cured (vulcanized) into their final form to produce the belt as a finish product.

United States Patent 8,910,780 discloses a method for manufacturing conveyor belts which are free of rubbery polymers that need to be cured and thereby eliminates that need for curing the belts in a cure step. This technique is carried out in a continuous process that reduces labor requirements. It offers a greatly simplified alternative to extrusion coating techniques and more importantly provides belts that offer improved carcass ply adhesion which can be used in heavy duty applications. By eliminating cured rubbers from the process, recycling is a viable option by allowing for trim waste and other scrap materials to be recycled. Accordingly, by practicing the process of United States Patent 8,910,780 conveyor belts can be made by a simpler process that requires less labor in a shorter processing time. In many cases, manufacturing cost is also reduced by reduced energy requirements and by lower cost raw materials.

United States Patent 8,910,780 more specifically reveals a method of manufacturing a belt which comprises: (1) impregnating a fabric material with a bonding agent in a plastisol to form coated fabric material, (2) applying a plastisol layer between two or more layers of coated fabric thereby creating a belt carcass, (3) continuously feeding the belt carcass into a double belt press which presses the-impregnated fabric materials together with the plastisol layer(s) at a pressure of at least 34.5 kPa (5 psi) to produce a structured fabric carcass while (4) heating the structured fabric carcass to a temperature which is within the range of about 182.2°C (360°F) to about 232.2°C (450°F). for a period of at least 6 minutes, (5) continuously withdrawing the fabric carcass from the double belt press, (6) scattering a thermoplastic elastomer resin composition onto the upper and lower surfaces of the fabric carcass, (7) pressing the thermoplastic elastomer resin composition onto the upper and lower surfaces of the fabric carcass by continuously feeding the fabric reinforcement into a second double belt press which is maintained at a temperature of at least 171.1°C (340°F) and at a pressure of at least 34.5 kPa (5 psi), and (8) continuously withdrawing the finished belt from the second double belt press. However, the conveyor belts made in accordance with United States Patent 8,910,780 have a carry layer and a pulley cover layer which is comprised of polyvinyl chloride (PVC) rather than a cured rubbery polymer.

There remains to be a long felt need for a technique of manufacturing conveyor belts having the beneficial attributes of being comprised of a cured rubber, such as high temperature resistance, by a simpler and less labor intensive process. For instance, it would be highly desirable to reduce the requirements for Banbury mixing and calendaring of the rubber utilized in making the carry cover layer and the pulley cover layer of such conveyor belts. However, a commercially viable method for manufacturing such a conveyor belt has proven to be elusive.

### SUMMARY

The objectives of the invention are achieved by the method according to appended claim 1. Preferred embodiments are disclosed in the dependent claims. This summary is provided to introduce a selection of concepts that are further described below in the detailed description. This summary is not intended to identify key or essential features of the claimed subject matter, nor is it intended to be used as an aid in limiting the scope of the claimed subject matter.

Aspects of this disclosure are methods of manufacturing conveyor belts having a top layer, a bottom layer, and a fabric reinforcement layer which is sandwiched between the top layer and the bottom layer. In the manufacture of the conveyor belts, an uncured belt structure, an uncured belt and a cured conveyor belt are successively produced in a single continuous operation, which is different from calendering in one step, and pressing a belt section in a second separate step.

In some aspects, methods include (1) applying a rubber composition to the bottom side of a fabric reinforcement and scattering a productive thermoplastic elastomer composition onto the top side of the fabric reinforcement to produce an uncured belt structure, and then (2) continuously feeding the uncured belt structure into a double belt press to press the productive thermoplastic elastomer composition together with the fabric reinforcement at a suitable pressure, such as at least 82.7 kPa (12 psi), to produce an uncured belt. (3) The uncured belt is heated the double belt press to a suitable temperature, which may be at least 148.9°C (300°F), and (4) then maintained in the double belt press under the suitable pressure and temperature for a suitable residence time, such as at least 20 minutes, to produce a cured conveyor belt. Then (5) the cured conveyor belt is continuously withdrawn from the double belt press, essentially in a synchronous manner with the step (2) of continuously feeding the uncured belt structure into a double belt press. In such continuous and successive stages, the uncured belt structure, the uncured belt and the cured conveyor belt are produced in a single continuous operation.

In some aspects, the productive thermoplastic elastomer composition, which may be in the form of pellets, is a blend of non-productive thermoplastic elastomer pellets and a peroxide crosslinking agent which is supported on a powdered carrier. In some cases, the nonproductive thermoplastic elastomer pellets are made by extrusion with a co-rotating, intermeshing twin screw extruder. The thermoplastic elastomer, at least one filler, and at least one processing oil may be blended in the co-rotating, intermeshing twin screw extruder in making nonproductive thermoplastic elastomer pellets, in an aspect.

In some embodiments, the productive thermoplastic elastomer composition is made by dry blending the nonproductive thermoplastic elastomer pellets with the peroxide crosslinking agent which is supported on the powdered carrier. Furthermore, a curative co-agent may be blended in the co-rotating, intermeshing twin screw extruder in making the nonproductive thermoplastic elastomer pellets. In some aspects, at least one processing aid is further blended in the co-rotating, intermeshing twin screw extruder in making the nonproductive thermoplastic elastomer pellets. Yet in other aspects, at least one antioxidant is further blended in the co-rotating, intermeshing twin screw extruder in making the nonproductive thermoplastic elastomer pellets.

In some cases, the non-productive thermoplastic elastomer pellets have an average particle size which is within the range of about 0.1 mm to about 2 mm, within the range of about 0.2 mm to about 1 mm, or even within the range of about 0.3 mm to about 0.7 mm.

In some aspects, the double belt press belt has belt surfaces which are contain polytetrafluoroethylene impregnated fiberglass or stainless steel. Further, the double belt press may heats the uncured conveyor belt by conduction heating. In some cases, the uncured belt is maintained in the double belt press in step (4) under a pressure which is within the range of 96.5 kPa to 206.8 kPa (14 psi to 30 psi), and at a temperature which may be within the range of 160°C to 204.4°C (320°F to 400°F). In some cases, the uncured belt is maintained in the double belt press in step (4) under a pressure which is within the range of 103.4 kPa to 172.4 kPa (15 psi to 25 psi) and at a temperature which is within the range of 162.8°C to 176.7°C (325°F to 350°F).

### BRIEF DESCRIPTION OF THE DRAWINGS

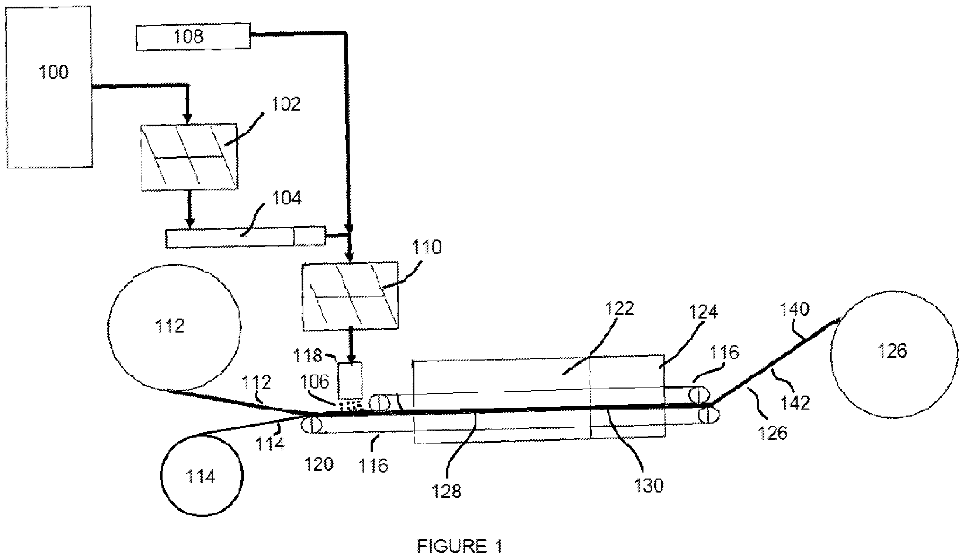

Certain embodiments of the present invention will hereafter be described with reference to the accompanying drawing, wherein like reference numerals denote like elements. It should be understood, however, that the accompanying figure illustrates the various implementations described herein and is not meant to limit the scope of various technologies described herein, and wherein Figure 1 is a schematic drawing of one method aspect according to the present invention, for manufacturing a conveyor belt which utilizes a double belt press.

### DETAILED DESCRIPTION

The present invention provides methods for continuous production of a cured rubber conveyor belt having high temperature resistance by a simple process which is less labor intensive than prior art methods. These methods reduce or eliminate the requirements for Banbury mixing and calendaring, and accordingly reduce overall production cost. Additionally, these methods result in improved rubber formulation consistency and in some cases reduced energy requirements.

According to the present invention, methods of manufacturing a conveyor belt having a top layer, a bottom layer, and a fabric reinforcement layer which is sandwiched between the top layer and the bottom layer, include (1) applying a rubber composition to the bottom side of a fabric reinforcement and scattering a productive thermoplastic elastomer composition onto the top side of the fabric reinforcement to produce an uncured belt structure, (2) continuously feeding the uncured belt structure into a double belt press to press the productive thermoplastic elastomer composition together with the fabric reinforcement at a pressure of at least 82.7 kPa (12 psi) to produce an uncured belt, (3) heating the uncured belt in the double belt press to a temperature of at least 148.9°C (300°F), (4) maintaining the uncured belt in the double belt press under a pressure of at least 82.7 kPa (12 psi) and a temperature of at least 148.9°C (300°F) for a residence time of at least 20 minutes to produce a cured conveyor belt, and (5) continuously withdrawing the cured conveyor belt from the double belt press.

In the practice of some aspects of the present invention, an uncured rubber composition is applied to the bottom side of a fabric reinforcement and a productive thermoplastic elastomer composition is scattered onto the top side of the fabric reinforcement to produce an uncured belt structure. The rubber utilized in the uncured rubber composition can be chosen from a wide variety of natural and synthetic rubbers. For instance, the rubber can be natural rubber, styrene-butadiene rubber, polybutadiene rubber, synthetic polyisoprene rubber, nitrile rubber, ethylenepropylene-diene monomer rubber (EPDM), polychloroprene, and the like or blends thereof. The uncured rubber composition will also typically include a curative as well as one or more of accelerators, antioxidants, fillers, processing oils, extending oils, and other desired rubber compounding chemicals. The curative will typically be sulfur, a sulfur containing compound, or a peroxide curative. The filler will typically be one or more of carbon black, silica, clay, and lignin.

The fabric reinforcement may be a material based upon cotton, a polyester, a nylon, polyaramid, fiberglass, or various blends thereof. For instance, the polyester may be polyethylene terephthalate or polyethylene naphthalate. In some cases the polyester may be a copolyester which contains repeat units that are derived from both terephthalic acid and isophthalic acid or dimethyl esters thereof. In such cases the copolyester will typically contain at least about 95 weight percent terephthalic acid and up to about 5 weight percent isophthalic acid. The copolyester may, in some cases, contain at least about 97 weight percent terephthalic acid and up to about 3 weight percent isophthalic acid. The polyester fabric may, in some aspects, be made from polyester staple yarn to improve adhesion characteristics. The nylon fabrics that may be used in conjunction with the disclosure, may be based upon virtually any type of nylon, such as nylon-6,6, nylon-6,12, nylon-6,10, nylon-6,9, nylon-6, nylon-11, or nylon-12. For commercial reasons, the nylon will typically be nylon-6,6 or nylon-6. In any case, the fabric material will normally be a woven fabric. The fabric reinforcement will normally be treated with a resorcinol-formaldehyde latex dip to improve the adhesion between the fabric and the rubber components of the conveyor belt (the top carry cover layer and the bottom pulley cover layer).

The productive thermoplastic elastomer composition is a blend of non-productive thermoplastic elastomer pellets and a peroxide crosslinking agent which is supported on a powdered carrier. The nonproductive thermoplastic elastomer pellets may be made by extrusion with a co-rotating, intermeshing twin screw extruder. In an example extrusion process, a thermoplastic elastomer, at least one filler, and at least one processing oil are blended in co-rotating, intermeshing twin screw extruder to make the nonproductive thermoplastic elastomer pellets. A curative co-agent may be included in the nonproductive thermoplastic elastomer pellets. In some cases, such a curative co-agent may be an acrylate, a methacrylate, or a maleimide to attain a very fast cure rate or in the alternative may be a polybutadiene, a triallyl cyanurate (TAC), triallyl isocyanurate (TAIC) or triallyl phthalate (DAP) to attain a more moderate rate of cure. With reference to Figure 1, these materials 100 may be premixed in a powder mixer 102 as before being fed into the co-rotating, intermeshing twin screw extruder 104. In some aspects, the non-productive thermoplastic elastomer pellets have an average particle size which is within the range of 0.1 mm to 2 mm and more typically have an average particle size which is within the range of 0.2 mm to 1 mm. The non-productive thermoplastic elastomer pellets may even have an average particle size which is within the range of 0.3 mm to 0.7 mm.

Productive thermoplastic elastomer pellets 106 are then made by dry blending the nonproductive thermoplastic elastomer pellets with peroxide curing agent 108, which is supported on the powdered carrier. For instance, this dry blending can be done in any suitable powder mixer such as a drum mixer 110 as illustrated in Figure 1. The peroxide curing agents 108 which may be used in the practice of some aspects of the disclosure are those which are generally suitable for curing EPDM. Some representative examples of organic peroxides which can be used include, but not limited to, dicumyl peroxide, bis-(t-butyl peroxy-diisopropyl benzene, t-butyl perbenzoate, di-t-butyl peroxide, 2,5-dimethyl-2,5-di-t-butylperoxyhexane, alpha-alpha-bis(t-butylperoxy) diisopropylbenzene, methylethyl ketone peroxide, cyclohexanone peroxide, cumene hydroperoxide, pinane hydroperoxide, p-menthane hydroperoxide, t-butyl hydroperoxide, di-t-butyl peroxide, and the like. Dicumyl peroxide and di-t-butyl peroxide are highly preferred peroxide compounds. In any case, the peroxide crosslinking agent will be supported on an inert powdered carrier, such as silica, clay or calcium carbonate. The peroxide may be present on the powdered carrier at a level which is within the range of about 40 weight percent to about 70 weight percent, or even within the range of about 50 weight percent to 60 weight percent, based upon the total weight of the peroxide and the carrier. In an embodiment, the curative co-agent can be included with the peroxide curing agent 108.

Referring again to Figure 1, a fabric reinforcement (carcass) 112, having the uncured rubber composition 114 upon or applied to the bottom side thereof, may continuously advanced toward a double belt press 116 with productive thermoplastic elastomer pellets 106 being scattered from pellet distributor 118 over the top surface of the fabric reinforcement 112 to make an uncured belt structure 120. The productive thermoplastic elastomer pellets 106 may be distributed in a relatively uniform manner over the top surface of the fabric reinforcement 112 with pellet distributor 118.

The uncured belt structure 120 is then continuously fed into the double belt press 116 which heats the uncured belt structure 120 to a temperature at least about 148.9°C (300°F) in a heating zone 122. In some aspects, the double belt press 116 heats the structured fabric reinforcement by conduction heating. The uncured belt structure 120, in some cases, will be heated to a temperature which is within the range of about 160°C to about 204.4°C (about 320°F to about 400°F), or even heated to a temperature which is within the range of about 162.8°C to about 176.7°C (about 325°F to about 450°F). The uncured belt structure 120 may be held under a pressure of at least about 82.7 kPa (12 psi) in the double belt press 116 to push the bottom layer formed of uncured rubber composition 114 and the top layer formed of productive thermoplastic elastomer pellets 106 into the fabric reinforcement 112. The pressure applied in the double belt press 116, in some aspects, may be within the range of about 96.5 kPa to about 206.8 kPa (about 14 psi to about 30 psi), or even within the range of about 103.4 kPa to about 172.4 kPa (about 15 psi to about 25 psi). Belts used as one or both belt component(s) of double belt press 116 may have surfaces which contain polytetrafluoroethylene (PTFE) impregnated fiber glass or even a thin layer of stainless steel.

The uncured belt structure 120 is maintained in the double belt press 116 at the desired temperature and under the desired pressure for a period of at least 20 minutes, in some cases. In some aspects, the uncured belt structure may have a residence time in double belt press 116 which is within the range of about 25 minutes to about 45 minutes and, may even have a residence time in double belt press 116 which is within the range of about 30 minutes to about 35 minutes. After being cured, the cured conveyor belt 130 will be cooled in a cooling zone 124 and continuously withdrawn from the double belt press 116, as finished belt 126. In some embodiments, excess material is continuously trimmed off of the edges of the cured conveyor belt 130 after it is continuously withdrawing from the double belt press 116.

Conveyor belts 126 manufactured in accordance with the present invention include an elastomeric body having a load carrying surface (top surface) 140 and a parallel pulley engaging surface (bottom surface) 142, where a fabric reinforcement 112 is disposed within the elastomeric body of the belt 126. In other words the fabric reinforcement 112 is situated between the pulley cover layer 142 and the load carrying layer 140 of the belt.

Some embodiments of the present invention are illustrated by the following examples that are merely for the purpose of illustration and are not to be regarded as limiting the scope of the disclosure or the manner in which it can be practiced. Unless specifically indicated otherwise, parts and percentages are given by weight.

### Example 1

In this experiment a series of productive thermoplastic elastomer compositions for use in manufacturing conveyor belts in accordance with the disclosure were prepared. Previous testing on a twin screw extruder using only Tafmer D610 thermoplastic elastomer as the feed showed that a constant linear temperature profile of 198.9°C (390°F) at a screw speed of 75 rpm and a feed rate of 5 pounds per hour gave the most consistent, smooth pellets. The lab pelletizer could not pull at a constant rate at this low speed so a puller was employed to improve strand diameter, and was utilized in the following examples.

Experimental blends were made by first feeding the ingredients identified in Table 1 below into a Plastic Lab 25 mm Twin Screw Extruder using one loss-in-weight feeder located prior to Zone 1 of the extruder. In Table 1, all ingredient levels are shown in parts by weight. The strands were later fed at the end of the run to a pelletizer to achieve pellets in the 2 mm to 3 mm diameter range. The pressure at the die increased from 2068 kPa (300 psi) with the pure Tafmer D610 thermoplastic elastomer to 4826 kPa (700 psi) with polymer blend of Example 1. Pressures in the 2757-2964 kPa (400-430 psi) range were observed with the polymer blends of Example 2 and Example 3. The screw motor ran at the 18 amp current level in the case of all of the materials tested. The temperature of the extrudate was measured by with an IR thermometer to be within the range of 182.2°C to 187.8°C (360°F to 370°F) and the extruder die thermometer measured the melt temperature to be 193.3°C (380°F).

All three of the non-productive thermoplastic polymer compositions made were dry mill mixed with a peroxide curative to make productive thermoplastic elastomer compositions which were suitable for use in making conveyor belts in accordance with the disclosure.

| | Example 1 | Example 2 | Example 3 |
|---|---|---|---|
| Non-Productive | | | |
| Thermoplastic elastomer | 100 | 100 | 100 |
| N-330 carbon black | 35 | 40 | 40 |
| Silica | 10 | - | - |
| Antioxidants | 8 | 9 | 9 |
| Processing Aid | 1 | 1 | 1 |
| Zinc Oxide | 10 | 5 | 5 |
| Paraffinic Processing Oil | 5 | 5 | 5 |
| Curative Co-Agent | 0 | 0 | 2.75 |
| Productive | | | |
| Bis(t-butylperoxy) isopropyl benzene | 4.5 | 4.5 | 4.5 |
| Curative Co-Agent | 2.75 | 2.75 | - |

This series of experiments illustrates that mixing of the non-productive materials can be done in a co-rotating, intermeshing twin screw extruder with a peroxide curative being added later by dry blending to make productive formulations. These productive formulations can then be used in manufacturing conveyor belts in accordance with the disclosure.

### List of Reference signs (part of the description):

- 100: Raw Materials
- 102: Powder Mixer
- 104: Intermeshing Twin Screw Extruder
- 106: Productive Thermoplastic Elastomer Pellets
- 108: Peroxide Curing Agent
- 110: Drum Mixer
- 112: Fabric Reinforcement
- 114: Uncured Rubber Composition
- 116: Double Belt Press
- 118: Pellet Distributor
- 120: Uncured Belt Structure
- 122: Heating Zone
- 124: Cooling Zone
- 126: Finished Belt
- 128: Uncured Conveyor Belt
- 130: Cured Conveyor Belt
- 140: Top Layer
- 142: Bottom Layer

This series of experiments illustrates that mixing of the non-productive materials can be done in a co-rotating, intermeshing twin screw extruder with a peroxide curative being added later by dry blending to make productive formulations. These productive formulations can then be used in manufacturing conveyor belts in accordance with the disclosure.

### List of Reference signs (part of the description):

- 100: Raw Materials
- 102: Powder Mixer
- 104: Intermeshing Twin Screw Extruder
- 106: Productive Thermoplastic Elastomer Pellets
- 108: Peroxide Curing Agent
- 110: Drum Mixer
- 112: Fabric Reinforcement
- 114: Uncured Rubber Composition
- 116: Double Belt Press
- 118: Pellet Distributor
- 120: Uncured Belt Structure
- 122: Heating Zone
- 124: Cooling Zone
- 126: Finished Belt
- 128: Uncured Conveyor Belt
- 130: Cured Conveyor Belt
- 140: Top Layer
- 142: Bottom Layer

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. A method of manufacturing a conveyor belt (126) having a top layer (140), a bottom layer (142), and a fabric reinforcement layer (112) disposed between the top layer (140) and the bottom layer (142), the method comprising:
- applying a rubber composition (114) to a first side of a fabric reinforcement (112) and scattering productive thermoplastic elastomer pellets (106) onto a second side of the fabric reinforcement (112) to produce an uncured belt structure (120), wherein the productive thermoplastic elastomer composition is a blend of thermoplastic elastomer pellets (112) and a peroxide crosslinking agent (126) which is supported on a powdered carrier;
- continuously feeding the uncured belt structure (120) into a double belt press (116) to press the productive thermoplastic elastomer pellets (106) together with the fabric reinforcement (112) at a pressure of at least 82.7 kPa (12 psi) to produce an uncured belt (128);
- heating the uncured belt in the double belt press (110) to a temperature of at least 148.9°C (300°F);
- maintaining the uncured belt in the double belt press (110) under a pressure of at least 82.7 kPa (12 psi) and a temperature of at least 148.9°C (300°F) for a residence time of at least 20 minutes to produce a cured conveyor belt (130); and,
- continuously withdrawing the cured conveyor belt (130) from the double belt press (110); wherein the uncured belt structure (120), the uncured belt (128) and the cured conveyor belt (130) are produced in a single continuous operation.

2. The method as claimed in claim 1 wherein the nonproductive thermoplastic elastomer pellets (112) are made by extrusion with a co-rotating, intermeshing twin screw extruder (104).

3. The method as claimed in claim 2 wherein a thermoplastic elastomer, at least one filler, and at least one processing oil are blended in the co-rotating, intermeshing twin screw extruder (104) in making the nonproductive thermoplastic elastomer pellets, and wherein the productive thermoplastic elastomer pellets (106) are made by dry blending the nonproductive thermoplastic elastomer pellets with the peroxide crosslinking agent which is supported on the powdered carrier.

4. The method as claimed in any of the previous claims, wherein the double belt press (116) comprises at least one belt having a surface comprised of polytetrafluoroethylene impregnated fiberglass.

5. The method as claimed in any of the previous claims, wherein the double belt press (116) comprises at least one belt having a surface comprised of stainless steel.

6. The method as claimed in any of the previous claims, wherein the double belt press (116) heats the structured fabric reinforcement by conduction heating.

7. The method as claimed in any of the previous claims, wherein the uncured belt (120) is maintained in the double belt press (116) under a pressure which is within the range of 96.5 kPa to 206.8 kPa (14 psi to 30 psi).

8. The method as claimed in any of the previous claims, wherein the uncured belt (120) is maintained in the double belt press (116) under a temperature which is within the range of i6o°C to 204.4°C (320°F to 400°F).

9. The method claimed in any of the previous claims, wherein the uncured belt (120) is maintained in the double belt press (116) under a pressure which is within the range of 103.4 kPa to 172.4 kPa (15 psi to 25 psi), and under a temperature which is within the range of 162.8°C to 176.7°C (325°F to 350°F).

## Patentansprüche

1. Verfahren zur Herstellung eines Förderbands (126) mit einer oberen Lage (140), einer unteren Lage (142) und einer Textilverstärkungslage (112), die zwischen der oberen Lage (140) und der unteren Lage (142) angeordnet ist, wobei das Verfahren umfasst:
- Aufbringen einer Kautschukzusammensetzung (114) auf eine erste Seite einer Textilverstärkung (112) und Streuen von produktiven thermoplastischen Elastomerpellets (106) auf eine zweite Seite der Textilverstärkung (112) zur Herstellung einer nicht vernetzten Bandstruktur (120), wobei die produktive thermoplastische Elastomerzusammensetzung eine Mischung aus thermoplastischen Elastomerpellets (112) und einem Peroxid-Vernetzungsmittel (126) ist, das sich auf einem pulverförmigen Träger befindet;
- kontinuierliches Zuführen der nicht vernetzten Bandstruktur (120) in eine Doppelbandpresse (116) zum Zusammenpressen der produktiven thermoplastischen Elastomerpellets (106) mit der Textilverstärkung (112) bei einem Druck von mindestens 82,7 kPa (12 psi) zur Herstellung eines nicht vernetzten Bands (128);
- Erwärmen des nicht vernetzten Bands in der Doppelbandpresse (110) auf eine Temperatur von mindestens 148,9°C (300°F);
- Halten des nicht vernetzten Bands in der Doppelbandpresse (110) bei einem Druck von mindestens 82,7 kPa (12 psi) und einer Temperatur von mindestens 148,9°C (300°F) für eine Verweilzeit von mindestens 20 Minuten zur Herstellung eines vernetzten Förderbands (130) und
- kontinuierliches Entnehmen des vernetzten Förderbands (130) aus der Doppelbandpresse (110);
wobei die nicht vernetzte Bandstruktur (120), das nicht vernetzte Band (128) und das vernetzte Förderband (130) in einem einzigen kontinuierlichen Arbeitsgang hergestellt werden.

2. Verfahren nach Anspruch 1, wobei die nicht produktiven thermoplastischen Elastomerpellets (112) durch Extrusion mit einem gleichläufigen dichtkämmenden Doppelschneckenextruder (104) hergestellt werden.

3. Verfahren nach Anspruch 2, wobei ein thermoplastisches Elastomer, mindestens ein Füllstoff und mindestens ein Weichmacheröl in dem gleichläufigen dichtkämmenden Doppelschneckenextruder (104) bei der Herstellung der nicht produktiven thermoplastischen Elastomerpellets vermischt werden, und wobei die produktiven thermoplastischen Elastomerpellets (106) durch Trockenmischen der nicht produktiven thermoplastischen Elastomerpellets mit dem Peroxid-Vernetzungsmittel hergestellt werden, das sich auf dem pulverförmigen Träger befindet.

4. Verfahren nach einem der vorhergehenden Ansprüche, wobei die Doppelbandpresse (116) mindestens ein Band mit einer Oberfläche umfasst, die aus mit Polytetrafluorethylen getränktem Glasfasergewebe besteht.

5. Verfahren nach einem der vorhergehenden Ansprüche, wobei die Doppelbandpresse (116) mindestens ein Band mit einer Oberfläche umfasst, die aus Edelstahl besteht.

6. Verfahren nach einem der vorhergehenden Ansprüche, wobei die Doppelbandpresse (116) die strukturierte Textilverstärkung mittels konduktiver Erwärmung erwärmt.

7. Verfahren nach einem der vorhergehenden Ansprüche, wobei das nicht vernetzte Band (120) in der Doppelbandpresse (116) bei einem Druck gehalten wird, der innerhalb des Bereichs von 96,5 kPa bis 206,8 kPa (14 psi bis 30 psi) liegt.

8. Verfahren nach einem der vorhergehenden Ansprüche, wobei das nicht vernetzte Band (120) in der Doppelbandpresse (116) bei einer Temperatur gehalten wird, die innerhalb des Bereichs von 160 °C bis 204,4 °C (320 °F bis 400 °F) liegt.

9. Verfahren nach einem der vorhergehenden Ansprüche, wobei das nicht vernetzte Band (120) in der Doppelbandpresse (116) bei einem Druck gehalten wird, der innerhalb des Bereichs von 103,4 kPa bis 172,4 kPa (15 psi bis 25 psi) liegt, und bei einer Temperatur, die innerhalb des Bereichs von 162,8 °C bis 176,7 °C (325 °F bis 350 °F) liegt.

## Revendications

1. Procédé de fabrication d'une bande transporteuse (126) ayant une couche supérieure (140), une couche inférieure (142) et une couche de renforcement de tissu (112) disposée entre la couche supérieure (140) et la couche inférieure (142), le procédé comprenant :
- l'application d'une composition de caoutchouc (114) sur un premier côté d'un renforcement de tissu (112) et la dispersion de granulés d'élastomère thermoplastique productif (106) sur un deuxième côté du renforcement de tissu (112) pour produire une structure de bande non durcie (120), la composition d'élastomère thermoplastique productif étant un mélange de granulés d'élastomère thermoplastique (112) et d'un agent de réticulation peroxyde (126) qui est supporté sur un vecteur en poudre ;
- l'alimentation continue de la structure de bande non durcie (120) dans une presse à double bande (116) pour presser les granulés d'élastomère thermoplastique productif (106) conjointement avec le renforcement de tissu (112) à une pression d'au moins 82,7 kPa (12 psi) pour produire une bande non durcie (128) ;
- le chauffage de la bande non durcie dans la presse à double bande (110) à une température d'au moins 148,9 °C (300 °F) ;
- le maintien de la bande non durcie dans la presse à double bande (110) sous une pression d'au moins 82,7 kPa (12 psi) et une température d'au moins 148,9 °C (300 °F) pendant un temps de séjour d'au moins 20 minutes pour produire une bande transporteuse durcie (130) ; et
- l'extraction continue de la bande transporteuse durcie (130) à partir de la presse à double bande (110) ;
la structure de bande non durcie (120), la bande non durcie (128) et la bande transporteuse durcie (130) étant produites dans une opération continue unique.

2. Procédé selon la revendication 1, dans lequel les granulés d'élastomère thermoplastique non productif (112) sont fabriqués par extrusion avec une extrudeuse à deux vis engrenante co-rotative (104).

3. Procédé selon la revendication 2, dans lequel un élastomère thermoplastique, au moins une charge, et au moins une huile d'usinage sont mélangés dans l'extrudeuse à deux vis engrenante co-rotative (104) lors de la fabrication des granulés d'élastomère thermoplastique non productif, et dans lequel les granulés d'élastomère thermoplastique productif (106) sont fabriqués par mélange à sec des granulés d'élastomère thermoplastique non productif avec l'agent de réticulation peroxyde qui est supporté sur le vecteur en poudre.

4. Procédé selon l'une quelconque des revendications précédentes, dans lequel la presse à double bande (116) comprend au moins une bande ayant une surface comprenant des fibres de verre imprégnées de polytétrafluoroéthylène.

5. Procédé selon l'une quelconque des revendications précédentes, dans lequel la presse à double bande (116) comprend au moins une bande ayant une surface comprenant de l'acier inoxydable.

6. Procédé selon l'une quelconque des revendications précédentes, dans lequel la presse à double bande (116) chauffe le renforcement de tissu structuré par chauffage par conduction.

7. Procédé selon l'une quelconque des revendications précédentes, dans lequel la bande non durcie (120) est maintenue dans la presse à double bande (116) sous une pression qui est dans la plage allant de 96,5 kPa à 206,8 kPa (14 psi à 30 psi) .

8. Procédé selon l'une quelconque des revendications précédentes, dans lequel la bande non durcie (120) est maintenue dans la presse à double bande (116) à une température qui est dans la plage allant de 160 °C à 204,4 °C (320 °F à 400 °F).

9. Procédé selon l'une quelconque des revendications précédentes, dans lequel la bande non durcie (120) est maintenue dans la presse à double bande (116) sous une pression qui est dans la plage allant de 103,4 kPa à 172,4 kPa (15 psi à 25 psi) et à une température qui est dans la plage allant de 162,8 °C à 176,7 °C (325 °F à 350 °F).
